Europäisches Patentamt

European Patent Office

Office européen des brevets

(19)

(11) Veröffentlichungsnummer: **0 120 377**
**B1**

(12) **EUROPÄISCHE PATENTSCHRIFT**

(45) Veröffentlichungstag der Patentschrift:
14.10.87

(21) Anmeldenummer: 84102595.0

(22) Anmeldetag: 09.03.84

(51) Int. Cl.⁴: **G 01 B 7/00,** G 01 D 5/22,
B 23 Q 35/26

(54) Relativwegaufnehmer.

(30) Priorität: 24.03.83 DE 3310788

(43) Veröffentlichungstag der Anmeldung:
03.10.84 Patentblatt 84/40

(45) Bekanntmachung des Hinweises auf die Patenterteilung:
14.10.87 Patentblatt 87/42

(84) Benannte Vertragsstaaten:
CH DE FR LI SE

(56) Entgegenhaltungen:
DE-A-2 106 632
DE-A-2 331 113
US-A-3 670 421
US-A-4 292 740

(73) Patentinhaber: Siemens Aktiengesellschaft Berlin
und München, Wittelsbacherplatz 2, D-8000
München 2 (DE)

(72) Erfinder: Stölben, Hans- Adolf, Elise- Späth-
Strasse 6, D-8520 Erlangen (DE)

# Beschreibung

Die Erfindung betrifft einen Relativwegaufnehmer mit einem Gehäuse, in dem eine Tastspitze gegen eine Feder längsbeweglich gelagert und mit einer Anzeigeeinrichtung verbunden ist, die Relativbewegungen der Tastspitze gegenüber dem Gehäuse registriert.

Ein derartiger Relativwegaufnehmer ist bekannt (US-A-3 670 421). Mit diesem Relativwegaufnehmer werden die Bewegungen zwischen zwei Punkten festgestellt. Dazu weist er als Besonderheit zwei Tastspitzen auf, die gleichzeitig an verschiedenen Orten anliegen. Die Relativbewegungen der beiden Tastspitzen gegeneinander werden erfaßt und ausgewertet. Auf diese Weise werden insbesondere Werkstücke auf Unebenheiten hin überwacht.

Derartige Relativwegaufnehmer werden insbesondere zum Überwachen von Komponenten und Rohrleitungssystemen in Kernkraftwerken auf Schwingungen gegenüber ihren Fundamenten und Abstützungen während des Betriebes eingesetzt. Die aktuellen Meßsignale der Anzeigeeinrichtung werden dabei mit Referenzsignalen verglichen.

Aus Veränderungen im Schwingungsverhalten der Komponenten oder Rohrleitungen sind sich anbahnende Schäden schon frühzeitig zu erkennen.

Die Überwachung von Werkstücken, insbesondere die Überwachung von Komponenten und Rohrleitungssystemen in Kernkraftwerken erfordert eine außerordentlich hohe Langzeitstabilität und Zuverlässigkeit der verwendeten Relativwegaufnehmer. Unter harten Betriebsbedingungen, insbesondere wegen Strahlung, Hitze und Unzugänglichkeit ist eine Wartung der Relativwegaufnehmer nur schwierig zu gewährleisten.

Der Erfindung liegt die Aufgabe zugrunde, einen Relativwegaufnehmer zu entwerfen, der zusammen mit der Anzeigeeinrichtung durch Fernbetätigung zu kalibrieren ist. Auf diese Weise soll durch in regelmäßigen zeitlichen Abständen durchgeführte Kalibrierungen, die selbst unter harten Betriebsbedingungen durchzuführen sind, die Zuverlässigkeit des Relativwegaufnehmers gewährleistet sein.

Die Aufgabe wird erfindungsgemäß dadurch gelöst, daß zur Kalibrierung die Tastspitze im Bereich ihres Tastspitzenkopfes quer zur Bewegungsrichtung unterteilt ist und daß der einem Meßobjekt zugewandte, erste Teil der Tastspitze derart ausgebildet ist, daß der der Anzeigeeinrichtung zugeordnete zweite Teil um einen festen Weg gegen einen Anschlag des ersten Teiles entgegen der Wirkrichtung der Feder zu bewegen ist, wozu der zweite Teil mit einem fernbedienbaren Antrieb versehen ist.

Die beiden Teile der Tastspitze beim erfindungsgemäßen Relativwegaufnehmer sind während eines Meßvorganges stets unbeweglich miteinander verbunden. Nur zur Kalibrierung, also außerhalb der üblichen Verwendung des Relativwegaufnehmers zu Meßzwecken, werden die beiden Teile der Tastspitze getrennt und um die durch den Anschlag definierte feste Strecke gegeneinander bewegt. Durch diese vorgegebene Strecke ist eine Kalibrierung der Anzeigeeinrichtung des Relativwegaufnehmers leicht durchführbar, da der wirklich zurückgelegte Weg exakt bekannt ist. Die Kalibrierung erfolgt mit dem fernbedienbaren Antrieb des Relativwegaufnehmers. Die Länge der definierten Strecke bestimmt die gewünschte Genauigkeit der Kalibrierung, und zwar des Relativwegaufnehmers einschließlich der an ihm angeschlossenen und für die Messung erforderlichen Meßkette. Der Kalibrierweg ist daher möglichst groß gegenüber der zu messenden Bewegung, vorzugsweise ein Mehrfaches der durchschnittlichen Meßbewegung.

Die Kalibriervorrichtung nach der Erfindung ist in jedem Relativwegaufnehmer unabhängig vom Aufbau der Anzeigeeinrichtung einsetzbar. Die Anzeigeeinrichtung kann beispielsweise eine Induktionsspule oder einen kapazitiven Weggeber enthalten oder kann mechanische Glieder aufweisen, die mit einem Anzeige- oder Schreibstift in Verbindung stehen.

Mit der Erfindung wird der Vorteil erzielt, daß mit einfachen Mitteln ein Relativwegaufnehmer, der in der Regel nur eine Tastspitze aufweist, durch Fernbedienung zu kalibrieren ist. Dadurch ist der erfindungsgemäße Relativwegaufnehmer ohne manuelle Wartung über einen langen Zeitraum an unzugänglichen Orten einsetzbar. Ein solcher Ort ist beispielsweise die wegen Strahlung oder Hitze unzugängliche Umgebung von Komponenten oder Rohrleitungen in Kernkraftwerken. Veränderungen im Schwingungsverhalten dieser Komponenten oder Rohrleitungen sind frühzeitig und zuverlässig zu erkennen.

Die Erfindung kann vorteilhaft so verwirklicht werden daß die beiden Teile der Tastspitze durch einen Dauermagneten miteinander gekoppelt sind. Dieser sorgt dann im Normalbetrieb für den zur Messung erforderlichen Zusammenhalt mit einer definierten Lage zwischen dem der Anzeigeeinrichtung abgekehrten Teil der Tastspitze und der Anzeigeeinrichtung selbst, wobei mit Anzeigeeinrichtung auch ein der Tastspitze zugeordneter Meßwertumformer gemeint ist. Die genannte Kopplung kann aber auch in anderer Weise, zum Beispiel durch eine federnde Raste erhalten werden.

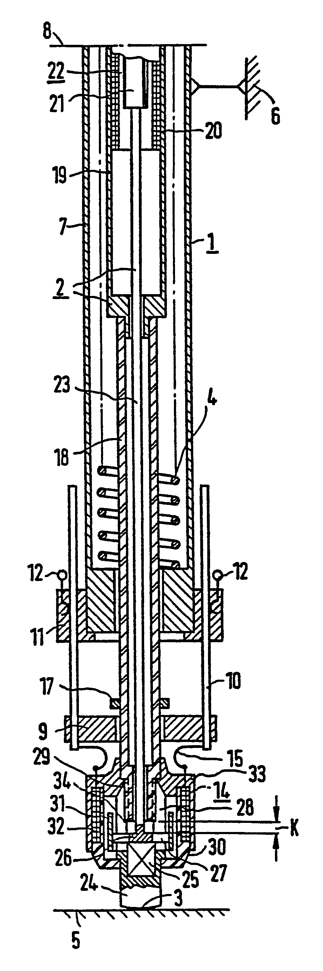

Der fernbedienbare Antrieb zur Erzeugung der Kalibrierbewegung kann vorteilhaft ein Elektromagnet sein, dessen Spule den der Anzeigeeinrichtung zugeordneten Teil der Tastspitze als Anker bewegt. Andere einsetzbare Antriebe umfassen pneumatisch oder hydraulisch betätigte Kolben. Für den vorgenannten Elektromagneten empfiehlt es sich, die Spule mit einem am Gehäuse verschiebbar angeordneten Kabelstützpunkt zu versehen, der durch Anschläge an der Tastspitze bewegbar ist. Damit kann man erreichen, daß die Tastspitze große Wege ausführen kann, ohne daß für diese großen Wege flexible Leitungen benötigt werden, die mechanisch empfindlich sein können. Anders ausgedrückt wird ein Teil des Weges der Spule durch den verschiebbar angeordneten Kontakt überbrückt, während für die kleinen Bewegungen, die das "Arbeitssignal" des Relativwegaufnehmers ergeben, der Kontakt nicht bewegt werden muß, wie im folgenden mit dem anhand der beiliegenden Zeichnung beschriebenen Ausführungsbeispiel näher erläutert wird. Die einzige Figur zeigt dazu in einem Längsschnitt den für die Erfindung wesentlichen Aufbau eines praktisch rotationssymmetrischen Relativwegaufnehmers.

Der Relativwegaufnehmer 1 ist in vereinfacht dargestellter Weise so befestigt, daß seine Tastspitze 2 mit ihrer Vorderseite 3 unter der Wirkung einer Feder 4 an dem Meßobjekt 5 anliegt. Das Meßobjekt ist zum Beispiel ein Dampferzeuger eines Druckwasserreaktors, dessen Relativbewegungen gegenüber dem Fundament 6 des Reaktorgebäudes, an dem der Relativwegaufnehmer 1 befestigt ist, ermittelt und überwacht werden sollen.

Der mit dem Fundament 6 verbundene, sozusagen feststehende Teil des Relativwegaufnehmers 1 umfaßt ein rohrförmiges Gehäuse 7 mit 25 mm Durchmesser, das in der Figur bei 8 abgebrochen ist. Das Gehäuse 7 umschließ die genannte Feder 4 und trägt an seiner dem Meßobjekt 5 zugekehrten Seite einen Kabelstützpunkt 9, der mit elektrisch leitenden Strange 10 an einem Anschlußring 11 verschiebbar gelagert ist. Damit is ein Gleitkontakt als der eine Teil einer elektrischen Verbindung von Anschlußklemmen 12 zum einem Tastspitzenkopf 14 hergestellt, der über kurze flexible Leiter 15 mit den Stäben 10 und den diesen zugeordneten Kontaktbahnen verbunden ist. Der Kabelstützpunkt 9 ist zwischen dem Tastspitzenkopf 14 und einem Anschlag 17 so angeordnet, daß er zwar bei großen Bewegungen, die insbesondere durch Wärmedehnungen verursacht werden und zum Beispiel 40 mm betragen, mitgenommen wird, bei den normalen Auslenkungen des Meßobjekts 4 von weniger als 0,2 mm dagegen nicht berührt werden muß.

Der Tastspitzenkopf 14 sitzt auf einem Stößel 18, der mit einem Rohrstück 19 im Gehäuse 7 verbunden ist. Das Rohrstück 19 dient zur Führung der Feder 4 und greift über eine im Gehäuse 7 feststehend angeordnete Induktionsspule 20, in der sich ein Aufnehmerkern 21 bewegt. Spule und Kern bilden einen induktiven Meßwertumformer 22 als Anzeigeeinrichtung für Relativbewegungen des Tastspitzenkopfes 14. Dazu ist der Aufnehmerkern 21 über eine von dem Stößel 18 eingeschlossene Stange 23 mit dem Tastspitzenkopf 14 verbunden, so daß die Stange 23 einen Teil der Tastspitze 2 bildet.

Die Stange 23 ist in der in der Figur dargestellten Lage mit einem Tastbolzen 24 unmittelbar verbunden, der aus gehärtetem Stahl besteht. Der Tastbolzen 24 trägt in sich einen Dauermagneten 25, an dem die Stange 23 mit einer Platte 26 an ihrem, dem Aufnehmerkern 21 abgekehrten Ende anliegt. Die Platte 26 wirkt als Anker, so daß eine Haltekraft von 5 N aufgebracht wird.

Die Platte 26 sitzt in dem durch eine Kappe 30 abgeschlossenen Inneren des Tastspitzenkopfes 14. Dort trägt sie mit drei als Arme 27 wirkenden seitlichen Verlängerungen einen rohrförmigen Anker 31. Der Anker 31 ist einer Spule 32 zugeordnet, die in einem am freien Ende des Stößels 18 sitzenden Spulenkörper 33 eingeschoben wird. Der Spulenkörper 33 ist dadurch festgelegt, daß der Tastbolzen 24 mit einem für die Arme 27 geschlitzten Gewindenippel 28 auf das mit einem Gewinde versehene Ende 29 des Stößels 18 aufgeschraubt ist.

Das freie Ende 29 des Stößels 18 bildet einen Anschlag 34 für die Platte 26 der Stange 23. Damit wird ein Spiel für eine Relativbewegung zwischen der Stange 23 und dem Stößel 18 mit dem Tastspitzenkopf 14 vorgegeben, die zu einer Kalibrierung der Anzeigeeinrichtung 22 benutzt wird. Die Kalibrierungsbewegung erfolgt durch Fernbetätigung, wenn die Spule 32 erregt wird und als mechanischer Antrieb über ihren Anker 31 die Stange 23 mit dem Aufnehmerkern 21 verstellt.

Beim Ausführungsbeispiel beträgt der Kalibrierungsweg K 1 mm. Dies ist das mindestens 5-fache des für betriebliche Messungen benötigten Weges von 0,2 mm, so daß eine große Genauigkeit der Kalibrierung erreicht wird. Die Bewegung des Aufnehmerkerns 21 ist jederzeit und ohne Zugang zum Relativwegaufnehmer 1 möglich. Außerdem wird durch den Kalibrierweg "K" auch die Aufzeichnung des zu erfassenden Relativweges praktisch nicht geändert, weil die Erfassung des Relativweges mit dem Tastspitzenkopf 14 erhalten bleibt. Es wird lediglich die relative Lage der der Anzeigevorrichtung 22 zugeordneten Stange 23 der Tastspitze 2 gegenüber dem anderen Teil mit dem Tastspitzenkopf 14 und dem Stößel 18 um den Betrag K geändert.

Die aus der Figur ersichtliche elektrische Verbindung mit dem Gleitkontakt gestattet es, auch extrem große Wärmedehnungen, die bei Messungen in Kernkraftwerken in der Größenordnung von 40 mm liegen können, aufzunehmen, ohne daß die dazu notwendigen flexiblen Verbindungen mechanisch empfindlich werden oder aber das Gewicht der für die Genauigkeit der Messung bestimmenden Teile unzulässig erhöhen. Hierzu ist zu bemerken, daß die Masse der als Ausführungsbeispiel dargestellten Tastspitze trotz der Kalibriermöglichkeit nach der Erfindung nur 15 gr beträgt, so daß kleine Schwingungen mit Frequenzen bis zu mehreren 100 Hz auch mit der

erfindungsgémäßen Kalibrierung einwandfrei aufgezeichnet werden.

**Patentansprüche**

1. Relativwegaufnehmer mit einem Gehäuse (7), in dem eine Tastspitze (2) gegen eine Feder (4) längsbeweglich gelagert und mit einer Anzeigeeinrichtung (22) verbunden ist, die Relativbewegungen der Tastspitze (2) gegenüber dem Gehäuse (7) registriert, dadurch gekennzeichnet, daß zur Kalibrierung die Tastspitze (2) im Bereich ihres Tastspitzenkopfes (14) quer zur Bewegungsrichtung unterteilt ist und daß der einem Meßobjekt (5) zugewandte erste Teil (14, 18) der Tastspitze (2) derart ausgebildet ist, daß der der Anzeigeeinrichtung (22) zugeordnete zweite Teil (23) um einen festen Weg (K) gegen einen Anschlag (34) des ersten Teiles (14, 18) entgegen der Wirkrichtung der Feder (4) zu bewegen ist, wozu der zweite Teil (23) mit einem fernbedienbaren Antrieb (31, 32) versehen ist.

2. Relativwegaufnehmer nach Anspruch 1, dadurch gekennzeichnet, daß die beiden Teile (23, 14) der Tastspitze (2) durch einen Dauermagnet (25) miteinander gekoppelt sind.

3. Relativwegaufnehmer nach Anspruch 1 oder 2, dadurch gekennzeichnet, daß der Antrieb ein Elektromagnet ist, dessen Spule (32) den der Anzeigeeinrichtung (22) zugeordneten Teil (23, 26) der Tastspitze (2) als Anker bewegt.

4. Relativwegaufnehmer nach Anspruch 3, dadurch gekennzeichnet, daß die Spule (32) mit einem am Gehäuse (7) verschiebbar angeordneten Kabelstützpunkt (9) versehen ist, der durch Anschläge (17) an der Tastspitze (2) bewegbar ist.

**Claims**

1. A relative displacement pick-up comprising a housing (7) in which a probe tip (2) is mounted so as to be longitudinally movable against the influence of a spring (4) and is connected to a display device (22) which records relative movements of the probe tip (2) relative to the housing (7), characterised in that, for calibration purposes, in the region of its head (14), the probe tip (2) is sub-divided transversely to the direction of movement; and that the first part (14, 18) of the probe tip (2), which faces towards an object (5) to be measured, is so formed that the second part (23), which is assigned to the display device (22), is to be moved through a fixed distance (K) towards a stop (34) on the first part (14, 18) against the direction of action of the spring (4), for which purpose the second part (23) is provided with a remotely-controllable drive (31, 32).

2. A relative displacement pick-up as claimed in claim 1, characterised in that the two parts (23, 14) of the probe tip (2) are coupled to one another by a permanent magnet (25).

3. A relative displacement pick-up as claimed in claim 1 or claim 2, characterised in that the drive is an electro-magnet whose coil (32) moves as armature that part (23, 26) of the probe tip (2) which is assigned to the display device (22).

4. A relative displacement pick-up as claimed in claim 3, characterised in that the coil (32) is provided with a cable support point (9) which is arranged to be displaceable on the housing (7) and which can be moved by projections (17) on the probe tip (2).

**Revendications**

1. Capteur de déplacements relatifs, comportant un boîtier (7) dans lequel est montée une pointe de détection (2) qui est mobile dans le sens longitudinal à l'encontre d'un ressort (4), et qui est reliée à un dispositif d'affichage (22) qui enregistre les déplacements relatifs de la pointe de détection (2) par rapport au boîtier (7), caractérisé par le fait que pour le calibrage, la pointe de détection (2) est subdivisée, dans la région de sa tête (14), transversalement au sens du déplacement, et que la première partie (14, 18) de la pointe de détection (2), qui est tournée du côté d'un objet à mesurer (5), est réalisée de telle manière que la seconde partie (23) qui est associée au dispositif d'affichage (22), est à déplacer d'une course fixe (K) contre une butée de la première partie (14, 18), dans le sens opposé à celui de l'action du ressort (4), ce pourquoi ladite seconde partie (23) est pourvue de moyens d'entraînement télécommandés (31, 32).

2. Capteur de déplacements relatifs selon la revendication 1, caractérisé par le fait que les deux parties (23, 14) de la pointe de détection (2), sont couplées entre elles à l'aide d'un aimant permanent (25).

3. Capteur de déplacements relatifs selon la revendication 1 ou 2, caractérisé par le fait que les moyens d'entraînement sont constitués par un électroaimant dont la bobine (32) déplace, en tant qu'armature, la partie (23, 26) de la pointe de détection, qui est associée au dispositif d'affichage (22).

4. Capteur de déplacements relatifs selon la revendication 3, caractérisé par le fait que la bobine (32) est pourvue d'un point d'appui d'un câble (9), disposé dans le boîtier (7) de manière à pouvoir y être déplacé, lequel point d'appui du câble est susceptible d'être déplacé par des butées (17) prévues sur le pointe de détection (2).